# EUROPEAN PATENT APPLICATION

(11) **EP 4 742 701 A1**
(43) Date of publication of application: **13.05.2026**
(21) Application number: 25211315.4
(22) Date of filing: 27.10.2025
(51) Int. Cl.: H04S 5/00, H04S 5/02, H04S 7/00

(54) **AUDIO DEVICE AND PORTABLE DEVICE**

(30) Priority: 08.11.2024 JP 2024196043
(71) Applicant: Alps Alpine Co., Ltd., Ota-ku, Tokyo 145-8501 (JP)
(72) Inventor: Nihira, Kazumasa, Ota-ku, Tokyo (JP); Tanno, Keita, Ota-ku, Tokyo (JP); Chaki, Hideto, Ota-ku, Tokyo (JP)
(74) Representative: Schmitt-Nilson Schraud Waibel Wohlfrom Patentanwälte Partnerschaft mbB

(57) **Abstract**

An audio device includes a left speaker disposed on a left side of a portable device, and to output sound toward the user, a right speaker disposed on a right side of the portable device, and to output sound toward the user, a rear center speaker disposed at a central position of the portable device, and to output sound in a direction opposite to the user, a pseudo surround signal generator to generate a left channel audio signal, a right channel audio signal, and a center channel audio signal, and a reverb effect imparting unit to impart a reverb effect to the center channel audio signal, and to generate a rear center channel audio signal, wherein the left speaker outputs the left channel audio signal, the right speaker outputs the right channel audio signal, and the rear center speaker outputs the rear center channel audio signal.

## Description

The present application is based on and claims priority to Japanese patent application No. 2024-196043 filed on November 8, 2024, with the Japan Patent Office.

The disclosures herein relate to audio devices and portable devices.

In the related art, a technology for providing sound image localization at a target position by convolving an acoustic transfer characteristic (head-related transfer function) from the target position to a listener's left and right ears with an audio signal to generate L and R channel audio signals and outputting the result to left and right speakers is known (e.g., Patent Literature (PTL) 1).

When the above-described technology for outputting L and R channel audio signals obtained by convolving head-related transfer functions up to the left and right ears to the left and right speakers is applied to the left and right speakers provided in a relatively small portable device such as a game controller, it has been difficult to generate a sound image having a good sense of localization and sense of presence due to factors such as size.

Therefore, the present disclosure aims to provide an audio device capable of generating a sound image having a good sense of localization and sense of presence even in a portable device.

### CITATION LIST

### PATENT LITERATURE

[PTL 1] Japanese Patent No. 3395809

The present disclosure relates to an audio device and a portable device according to the appended claims. Embodiments are disclosed in the dependent claims.

An audio device includes a left speaker disposed on a left side of a portable device when viewed from a user, the portable device being configured to be used in a handheld state by the user, and the left speaker being configured to output sound toward the user, a right speaker disposed on a right side of the portable device when viewed from the user, the right speaker being configured to output sound toward the user, a rear center speaker disposed at a central position of the portable device when viewed from the user, the rear center speaker being configured to output sound in a direction opposite to the user, a pseudo surround signal generator configured to generate, from target audio signals being left and right two-channel audio signals, a left channel audio signal, a right channel audio signal, and a center channel audio signal representing a component correlated between the left and right two-channel audio signals, and a reverb effect imparting unit configured to impart a reverb effect to the center channel audio signal, and to generate a rear center channel audio signal from the center channel audio signal to which the reverb effect is imparted, wherein the left speaker is configured to output the left channel audio signal, the right speaker is configured to output the right channel audio signal, and the rear center speaker is configured to output the rear center channel audio signal.

According to an audio device as described herein, a center channel audio signal is generated from a left channel audio signal and a right channel audio signal, the left channel audio signal is output from the left speaker, the right channel audio signal is output from the right speaker, and the center channel audio signal is output from the rear center speaker as a rear center channel audio signal to which a reverb effect is imparted.

Therefore, it is possible to provide a user with a sense of localization by three-channel audio signals of the left and right channel audio signals output from the left and right speakers and the rear center channel audio signal output from the rear center speaker and containing only components correlated to both the left and right channels. Further, since the audio signal of the rear center channel output from the rear center speaker is not simply an audio signal of the center channel but an audio signal of the center channel to which a reverb effect is added and which gives a specific feeling to the user, it is possible to generate a sound image having a good sense of localization and a sense of presence.

Further, by providing a center speaker and outputting the audio signal of the center channel from the center speaker, it is possible to generate a sound image having a stronger sense of localization.

The present invention further provides a portable device including the above-described audio device. The portable device may be a game controller.

As described above, according to the present invention, it is possible to provide an audio device capable of generating a sound image with a good sense of localization and sense of presence even in a portable device.
FIG. 1A is a drawing illustrating a front surface of a game controller according to an embodiment of the present disclosure;
FIG. 1B is a drawing illustrating a back surface of the game controller according to an embodiment of the present disclosure;
FIG. 2 is a drawing illustrating an output direction of each speaker of the game controller according to an embodiment of the present disclosure;
FIG. 3 is a drawing illustrating a configuration of an audio signal processor according to an embodiment of the present disclosure;
FIG. 4 is a drawing illustrating a configuration of a component separator that can be used in a surround audio signal generator according to an embodiment of the present disclosure;
FIG. 5A is a drawing illustrating an example of use of the game controller according to an embodiment of the present disclosure;
FIG. 5B is a drawing illustrating another example of use of the game controller according to an embodiment of the present disclosure; and
FIG. 6 is a drawing illustrating another example of a configuration of an audio signal processor according to an embodiment of the present disclosure.

In the following, embodiments of the present invention will be described with reference to an application to a game controller.

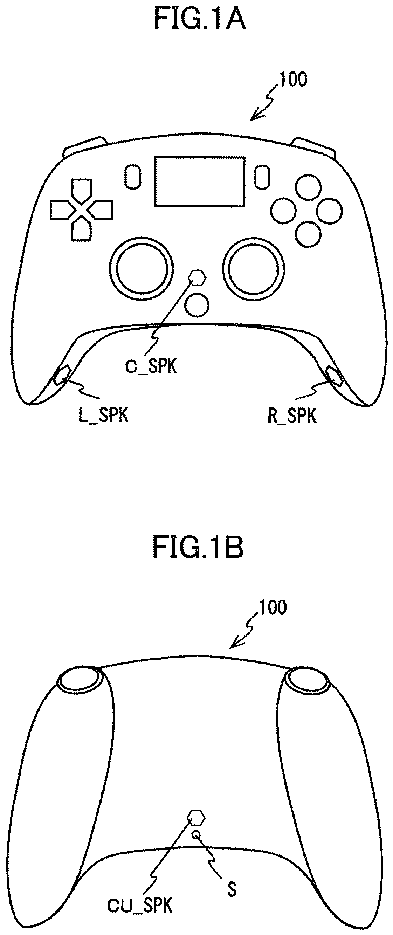

FIGS. 1A and 1B are drawings illustrating a game controller 100 according to an embodiment of the present disclosure.

FIG. 1A is a drawing illustrating a front surface of the game controller 100, and FIG. 1B is a drawing illustrating a back surface of the game controller 100. In each figure, the bottom side of the sheet refers to the near side facing a user who uses the game controller 100; opposite the near side, corresponds to the far side.

As shown in the figure, the game controller 100 has a shape in which various operation keys and displays for game operation are disposed on the front surface, and left and right lower parts of an operation panel in which two operation keys for game operation are disposed on the back surface are extended toward the front side so that they can be grasped with left and right hands, respectively.

A left speaker L_SPK is disposed at a position on a left side of the front surface of the game controller 100, a right speaker R_SPK is disposed at a position on a right side of the front surface of the game controller 100, and a center speaker C_SPK is disposed at a position at a central position in the left-right direction of the front surface of the game controller 100.

Further, a rear center speaker CU_SPK and a sensor S which is a distance sensor or a microphone are disposed at a central position in the left-right direction of the back surface of the game controller 100.

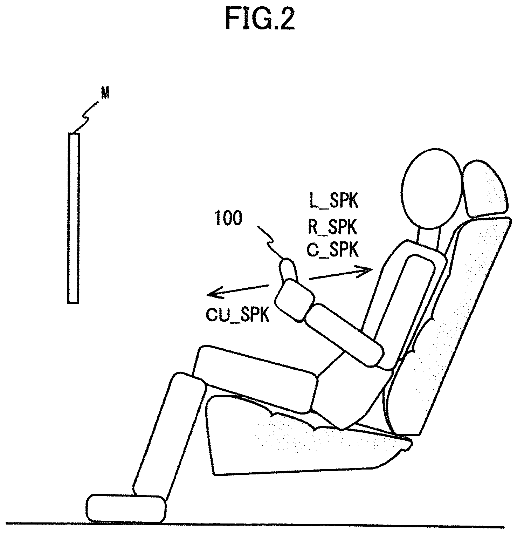

Here, as shown in FIG. 2, the left speaker L_SPK, the right speaker R_SPK, and the center speaker C_SPK output sound from the front surface of the game controller 100 toward the user (in a direction opposite to the back surface), and the rear center speaker CU_SPK outputs sound from the back surface of the game controller 100 toward the direction opposite to the user (in a direction opposite to the front surface). Note that, M in the drawing is a monitor for displaying a game screen.

Next, a sound source and an acoustic signal processor are housed in the game controller 100, and the sound source, the acoustic signal processor, the left speaker L_SPK, the right speaker R_SPK, the center speaker C_SPK, the rear center speaker CU_SPK, and the sensor S constitute an audio device built in the game controller.

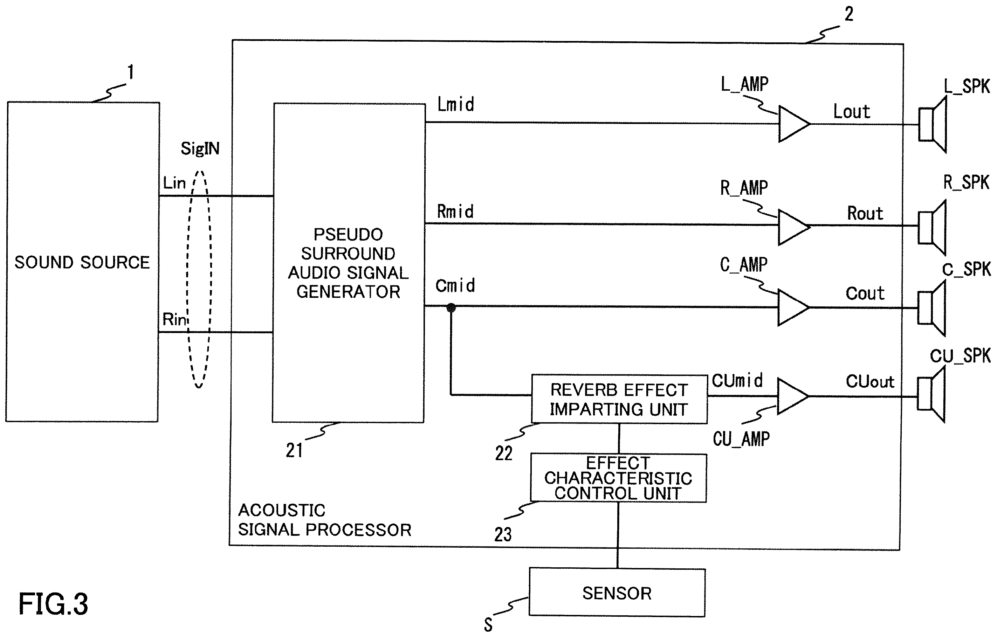

FIG. 3 is a drawing illustrating a configuration of an audio signal processor according to an embodiment of the present disclosure.

As shown in the figure, the audio device includes a sound source 1 configured to output stereo signals SigIN of two channels Lin and Rin, and an acoustic signal processor 2.

The acoustic signal processor 2 includes a pseudo surround audio signal generator 21 for upmixing the stereo signals SigIN of two channels Lin and Rin input from the sound source 1 to generate 3ch surround audio signals consisting of audio signals Lmid, Rmid, and Cmid.

Here, Lmid is Lin, or a sum of a component uncorrelated with Rin and a component correlated with Rin of Lin, Rmid is Rin, or a sum of a component uncorrelated with Lin and a component correlated with Lin of Rin, and Cmid is a sum of components correlated with the other components of Lin and Rin.

However, Lmid may be a sum obtained by weighted addition of a component uncorrelated with Rin and a component correlated with Rin of Lin, and Rmid may be a sum obtained by weighted addition of a component uncorrelated with Lin and a component correlated with Lin of Rin, and in this case, a weight used for each weighted addition is used that is tuned in advance so as to obtain a desired sense of localization.

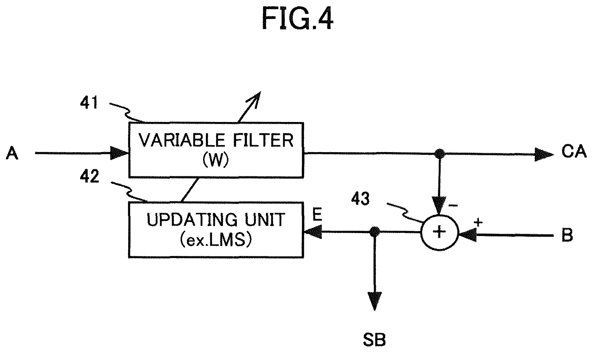

Such separation of correlated and uncorrelated components can be performed by using a component separator having a configuration shown in FIG. 4.

The component separator shown in FIG. 4 separates a component CA of signal B correlated with signal A and a component SB of signal B uncorrelated with signal A from signals A and B.

As shown in the figure, the component separator includes a variable filter 41, an updating unit 42 for updating a transfer function (filter coefficient) W of the variable filter 41 by an adaptive algorithm such as an LMS algorithm, and an adder 43, and the variable filter 41, the updating unit 42, and the adder 43 constitute an adaptive filter.

The variable filter 41 receives the signal A as an input, and the adder 43 subtracts the output of the variable filter 41 from the signal B and outputs it. The updating unit 42 executes an adaptive algorithm with the output of the adder 43 as error, and updates the transfer function W of the variable filter 41 so that the power of the error becomes minimum.

The power of the output of the adder 43 becomes minimum when the output of the variable filter 41 coincides with the component CA correlated with the signal A of the signal B, and at this time, the output of the adder 43 obtained by subtracting the output of the variable filter 41 from the signal B represents the component SB uncorrelated with the signal A of the signal B.

Therefore, the component CA correlated with the signal A of the signal B can be separated as the output of the variable filter 41, and the component SB uncorrelated with the signal A of the signal B can be separated as the output of the adder 43. If the signal A and the signal B are mutually switched, the component CB correlated with the signal B of the signal A and the component SA uncorrelated with the signal B of the signal A can be separated similarly.

Referring back to FIG. 3, the acoustic signal processor 2 includes a reverb effect imparting unit 22 which imparts a reverb effect (reverberation effect) to Cmid output from the pseudo surround audio signal generator 21 and outputs the result as CUmid, and an effect characteristic control unit 23 which can control the characteristic of the reverb effect imparted by the reverb effect imparting unit 22 according to the detected value of the sensor S.

However, in cases where the reverb effect characteristic imparted by the reverb effect imparting unit 22 is fixed, the effect characteristic control unit 23 need not perform any control.

Next, the acoustic signal processor 2 is provided with a left amplifier L_AMP for driving a left speaker L_SPK with a signal Lout obtained by amplifying Lmid output from a pseudo surround audio signal generator 21 and outputting a left channel sound from the left speaker L_SPK, a right amplifier R_AMP for driving a right speaker R_SPK with a signal Rout obtained by amplifying Rmid output from a pseudo surround audio signal generator 21 and outputting a right channel sound from the right speaker R_SPK, a center amplifier C_AMP for driving a center speaker C_SPK with a signal Cout obtained by amplifying Cmid output from a pseudo surround audio signal generator 21 and outputting a center channel sound from the center speaker C_SPK, and a CU center amplifier CU_AMP for driving a rear center speaker CU_SPK with a signal CUout obtained by amplifying CUmid output from a reverb effect imparting unit 22 and outputting a rear center channel sound from the rear center speaker CU_SPK.

Next, a case where the effect characteristic control unit 23 controls the characteristic of the reverb effect imparted by the reverb effect imparting unit 22 according to the detected value of the sensor S will be described.

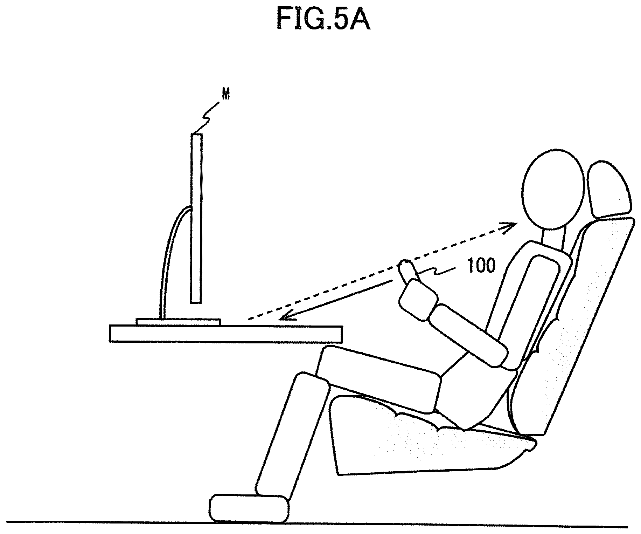

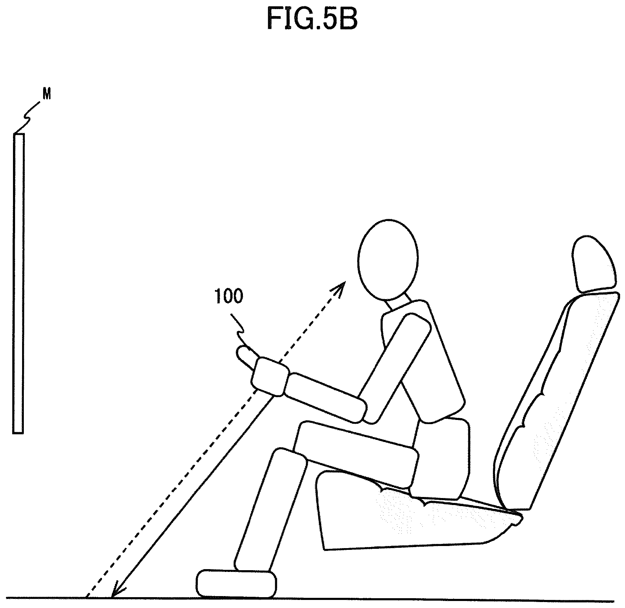

As shown in FIGS. 5A and 5B, a direct sound of the rear center channel sound (solid arrow in the figure) output from the rear center speaker CU_SPK does not reach the user, and the user hears the rear center channel sound reflected by a desk or floor in front of the user (dotted arrow in the figure).

Then, as shown in the figure, depending on the user's use of the game controller 100, the reflection point of the rear center channel sound changes, and as a result, the distance to the reflection point, the reflection intensity, and the sound quality also change. Therefore, if the characteristic of the reverb effect imparted by the reverb effect imparting unit 22 is fixed, the rear center channel sound heard by the user differs according to the mode of use of the game controller 100 by the user.

Therefore, the effect characteristic control unit 23 controls the characteristic of the reverb effect imparted by the reverb effect imparting unit 22 according to the detected value of the sensor S so that the rear center channel sound is heard by the user as similarly as possible regardless of the mode of use of the game controller 100 by the user.

Here, the reverb effect imparting unit 22 basically performs impartation of a reverb effect by using Cmid, output from the pseudo surround audio signal generator 21, as a direct sound and generating CUmid by mixing the direct sound with an artificial reverberation sound.

The artificial reverberation sound includes an early reflection sound and a late reverberation, and as the characteristics of the reverb effect to be controlled, gain of the entire CUmid, gain of the direct sound, gain of the artificial reverberation sound, respective gains of delay time, decay time, sound quality, and the early reflection sound and the late reverberation, delay time, decay time, sound quality, and other such characteristics may be included.

More specifically, for example, when a distance sensor is provided as the sensor S, the effect characteristic control unit 23 controls the characteristics of the reverb effect imparted by the reverb effect imparting unit 22 so that the gain of the entire CUmid increases as the distance to the reflection point of the rear center channel sound detected by the sensor S increases.

Further, when a microphone is provided as the sensor S, the characteristics of the reverb effect imparted by the reverb effect imparting unit 22 are controlled so that the gain of the entire CUmid is such that the magnitude of the rear center channel sound detected by the sensor S becomes a predetermined magnitude.

According to the audio device as described above, a sense of localization can be provided to the user by the left and right channel sounds output from the left and right speakers L_SPK and R_SPK, and by the rear center channel sound output from the rear center speaker CU_SPK, which includes only components correlated with both the left and right channels. Further, since the rear center channel sound output from the rear center speaker CU_SPK is an audio signal having a specific sense for the user by imparting a reverb effect to the center channel sound, a sound image having a good sense of localization and presence can be generated.

In the present embodiments, the center channel sound is also output from the center speaker C_SPK to further enhance the sense of localization.

Note that, the center speaker C_SPK and the configuration in which the center channel sound is output from the center speaker C_SPK of the above embodiments may be omitted if a sound image with sufficiently good sense of localization and sense of presence can be generated without these arrangements.

The case in which the sound source 1 of the audio device outputs a stereo signal SigIN has been described above, and the present embodiments are also applicable to the case in which the sound source 1 outputs a monaural signal.

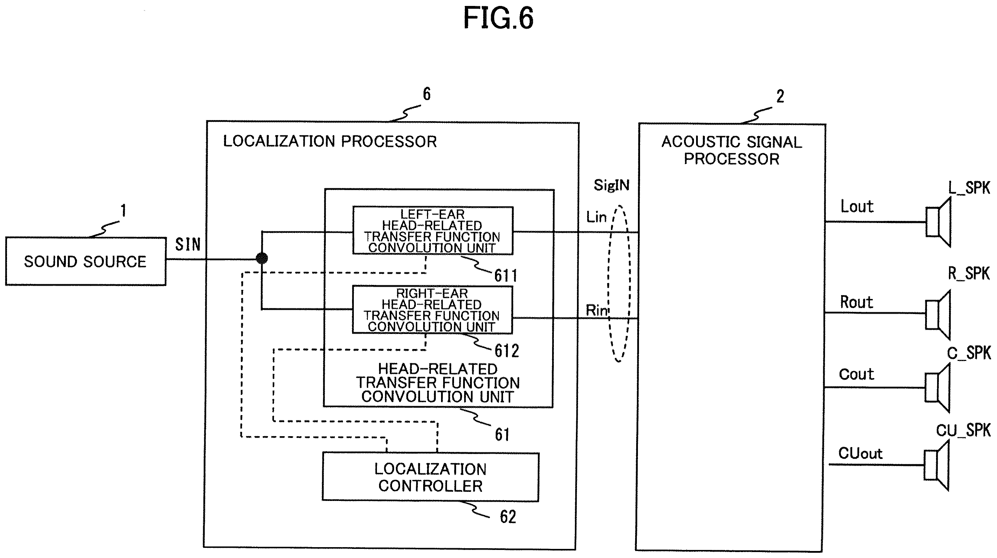

That is, in this case, as shown in FIG. 6, a localization processor 6 is provided which generates a stereo signal SigIN of two channels of Lin and Rin from the monaural signal SIN output from the sound source 1 and outputs the stereo signal SigIN to the acoustic signal processor 2.

Here, the localization processor 6 includes a head-related transfer function convolution unit 61 and a localization controller 62.

The head-related transfer function convolution unit 61 includes a left-ear head-related transfer function convolution unit 611 and a right-ear head-related transfer function convolution unit 612.

The localization controller 62 sets the head-related transfer function from the localization position to the listener's left ear in the left-ear head-related transfer function convolution unit 611, and to the right ear in the right-ear head-related transfer function convolution unit 612, based on the localization position of the sound image of the target audio signal SIN.

Here, the localization position of the sound image of the target audio signal S may be obtained as a predetermined distance from the localization position to the listener according to the set direction of the localization position with respect to the listener.

The left-ear head-related transfer function convolution unit 611 convolves the head-related transfer function set by the localization controller 62 with the audio signal SIN output from the sound source 1 and outputs it as Lin to the acoustic signal processor 2, and the right-ear head-related transfer function convolution unit 612 convolves the head-related transfer function set by the localization controller 62 with the audio signal SIN output from the sound source 1 and outputs it as Rin to the acoustic signal processor 2.

The foregoing description has been made using the game controller 100 as an example, but the present embodiments are not limited to the game controller 100, and can be similarly applied to any portable device such as any other controller or tablet device as long as the portable device is used in a form held by the user. The present embodiments can also be similarly applied to a portable device such as a portable display which only displays without accepting a user operation.

## Claims

1. An audio device comprising:
a left speaker disposed on a left side of a portable device when viewed from a user, the portable device being configured to be used in a handheld state by the user, and the left speaker being configured to output sound toward the user;
a right speaker disposed on a right side of the portable device when viewed from the user, the right speaker being configured to output sound toward the user;
a rear center speaker disposed at a central position of the portable device when viewed from the user, the rear center speaker being configured to output sound in a direction opposite to the user;
a pseudo surround signal generator configured to generate, from target audio signals being left and right two-channel audio signals, a left channel audio signal, a right channel audio signal, and a center channel audio signal representing a component correlated between the left and right two-channel audio signals; and
a reverb effect imparting unit configured to impart a reverb effect to the center channel audio signal, and to generate a rear center channel audio signal from the center channel audio signal to which the reverb effect is imparted, wherein:
the left speaker is configured to output the left channel audio signal;
the right speaker is configured to output the right channel audio signal; and
the rear center speaker is configured to output the rear center channel audio signal.

2. The audio device according to claim 1, further comprising a center speaker disposed at a central position of the portable device when viewed from the user, the center speaker being configured to output sound toward the user, wherein the center channel audio signal is output from the center speaker.

3. The audio device according to claim 1 or 2, further comprising a localization processor configured to generate the left and right two-channel audio signals from a result of convolving a head-related transfer function from a target sound image localization position to a left ear of the user with a monaural one-channel audio signal and a result of convolving a head-related transfer function from the target sound image localization position to a right ear of the user with the monaural one-channel audio signal.

4. The audio device according to one of claims 1 to 3, further comprising a sensor configured to detect a value related to a reflection state of the sound output from the rear center speaker, wherein the reverb effect imparting unit is configured to change a characteristic of the reverb effect according to the reflection state estimated from the value detected by the sensor.

5. The audio device according to one of claims 1 to 4, further comprising a sensor configured to detect a distance to a reflector configured to reflect the sound output from the rear center speaker, the reflector being configured to be disposed in a direction opposite to the user when viewed from the portable device, wherein the reverb effect imparting unit is configured to change a characteristic of the reverb effect according to the distance to the reflector detected by the sensor.

6. A portable device comprising the audio device of one of claims 1 to 5.

7. The portable device according to claim 6, wherein the portable device is a game controller.
